# EUROPEAN PATENT APPLICATION

(11) **EP 0 919 268 A1**
(43) Date of publication of application: **02.06.1999**
(21) Application number: 97830622.3
(22) Date of filing: 26.11.1997
(51) Int. Cl.: B01D 24/12, B01D 53/04, B01J 8/02, B01J 8/44

(54) **Filtering support for loose solid material and method for the production thereof**

(71) Applicant: COSTACURTA S.p.A. VICO, I-20161 Milano (IT)
(72) Inventor: Rosa, Lodovico, 23900 Lecco (IT)
(74) Representative: Marietti, Giuseppe

(57) **Abstract**

The invention concerns a filtering support for loose solid material, comprising a perforated sheet (2) disposed to separate a fluid feeding chamber (C) and a fluid outflow chamber (E), said sheet having blind perforations (3) on the side of the outflow chamber (E); moreover, a plurality of slots (5) are formed from the sheet side (9) opposite to said holes, to intersect with the hole apexes(4). The pressure drop introduced by the support or by single zones thereof is calculated and modulated by acting on the diameter and/or on the pitch of the holes, and/or on the width of the slots and/or on the degree of slot/ hole intersection.

## Description

The invention relates to a filtering support, which is able to support a bed of loose solid material, and regulate and make uniform the flow of either a single or two phases combination fluid that passes through both the bed of loose solid material and the same support.

As it is known, there are some applications in processes used for instance in petroleum, petro-chemical and chemical industries, wherein a bed of loose solid material is supported or contained by a filtering element which, besides supporting or containing the bed of loose solid material, also controls the transfer of a fluid through it and regulates the flow. An example of a particularly generalized application, which must not be considered as limiting the scope of the invention, is that in which the loose solid material consists of a catalyst flushed by a reacting fluid.

The fluid may flush the bed of loose solid material and the filtering support vertically or radially. When the bed of solid material is flushed vertically by the fluid, the filtering support consists of flat segments, which together reproduce the geometric form of the horizontal section of a container in which the support is to be positioned.

When the bed of loose solid material is flushed radially by the fluid, the filtering support has the function of containing the bed of loose solid material and is generally cylindrical in shape, coaxial with the axis of the container or reactor vessel.

In some containers, in which the bed of solid material is flushed radially, such bed is not static but moves slowly downward to the container lower part, where it is removed from the container to be regenerated, disposed or maybe recycled into the container from the upper part thereof.

Both when the flow is vertical and when it is radial, the present art currently uses a filtering support consisting of a grid and/or one or more perforated sheets lined on the side towards the bed of loose solid material by at least one metallic cloth, which has the function of preventing the passage of particles of the loose solid material into and through the filtering support.

The grid and/or the perforated sheets therefore constitute the filtering support element of the cloth and they define the flow resistance or pressure drop of the fluid through the filtering support.

This solution, however revealed itself unsuitable specially in case of radial flow and moving bed of loose solid material, owing to the fact that the metallic cloth offers a considerable resistance to the movement of the solid material and therefore the exchange of the particles of the same nearer to the cloth is hindered.

To overcome this drawback, the use of a special grid consisting of triangular profiles and support plates electrically welded between them has been proposed instead of the cloth. The distance between the triangular profiles determines the opening through which the fluid - but not the particles of loose solid material - must pass.

This solution is preferable to the preceding one, specially when the solid material is in movement, in that the triangular profiles, placed parallel to the generatrix of the cylinder formed by the filtering support, allow the material to move against a perfectly smooth surface, so to limit the formation and accumulation of fines due to the loose solid material scaling off by the friction between said material and the filtering element.

However, even this second solution, which is advantageous for some specific applications when compared to the traditional metal-net/perforated sheet or sheets, has the disadvantage of consisting of a plurality of elements (special grid + perforated sheets). Furthermore, the construction of filtering supports consisting of two or more elements is labour-intensive and therefore expensive. Moreover, the connection of the elements, generally by means of welding, constitutes, where execution is not perfect, a break-up risk zone.

The object of the present invention is therefore to solve the problems of the prior art, by a filtering support for loose solid material that is structurally monolithic and that simultaneously:
- prevents the passage of loose solid material therethrough
- supports the load or the force of the material
- controls the flow resistance or pressure drop theretrough
- has a perfectly smooth surface facing toward the loose solid material, which doesn't hinder the movement of the material in any way.

A feature of the present invention is the ability to very easily control the loss of flow of the fluid through the filtering support; it is in fact possible to determine, during the construction, an almost endless range of free transfer surfaces and therefore get much closer to the theoretically calculated values.

What above is achieved by the present invention, which relates to a filtering support for loose solid material characterized according to Claim 1.

Another object of the invention is a method for the production of a support of the said type, characterized according to Claim 11.

In a preferred embodiment of the invention, the filtering support for loose solid material consists of a sheet equipped with blind holes located preferably in aligned rows and opening onto the opposite side to that assigned to support the loose solid material, as well as a plurality of slots located on the sheet side assigned to support the loose solid material, which slots extend until they intersect with the apex of the holes, so that the fluid passes in succession through the slots and thereafter through the holes. In this way, the slots don't risk being obstructed by the loose solid material and they don't hinder the possible movements of the solid material. The control of the pressure drops introduced by the support could be effected either by varying the diameter of the holes or the pitch between them, or - at least within certain limits- the width of the slots, or, finally, the degree of interference between holes and slots, as will be better illustrated below.

The invention will now be described in more detail with reference to the enclosed drawings, in which:
- Fig. 1 is a cross-section, in a plane passing through the axis of a slot and of a line of holes, of a filtering support according to the invention;
- Fig. 2 is a plan view of the filtering support of figure 1, when seen from the side of the slots;
- Fig. 3 is an enlarged cross-section along the line A-A of figure 1, showing an individual hole;
- Fig. 4 shows an enlarged view the detail B of figure 1;
- Fig. 5 is a longitudinal development of the transfer section between a hole and the slot that intersects with it, that defines the ability of the drilled milled plate to regulate the flow.
- Figs. 6 and 7 show examples of possible alternative shapes of the slots.
- Figs. 8 to 14 show further examples of possible shapes of the slots and/or of the slot and hole array.

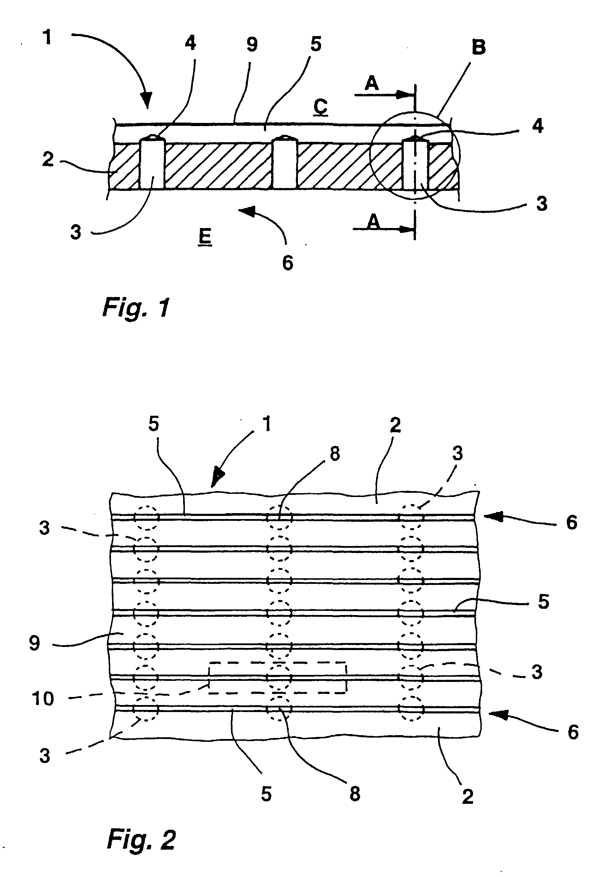

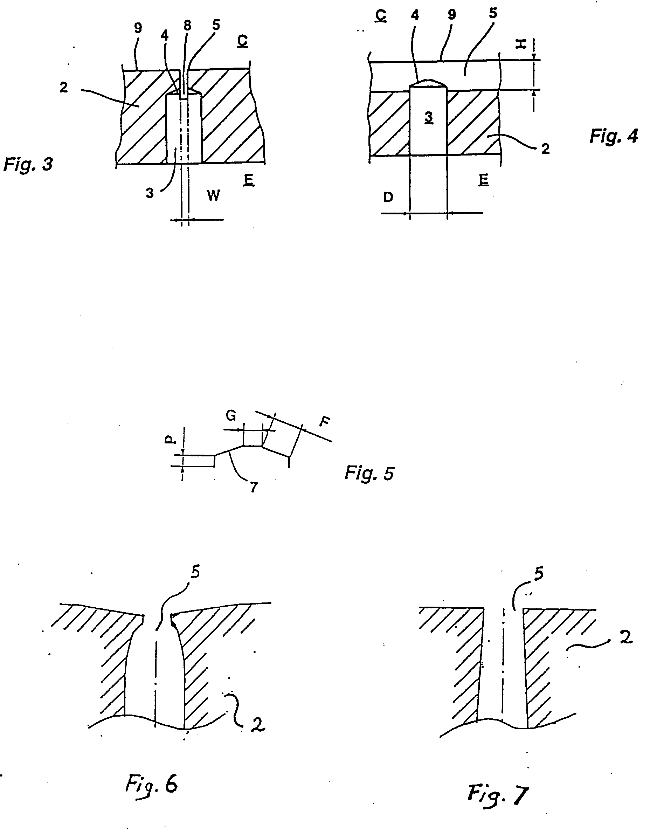

As it is shown in figure 1, the filtering support 1 according to the invention consists of a sheet 2 perforated with blind holes 3 on one side of the same, precisely assigned to be opposite the surface supporting the loose solid material, while on the other side of the sheet a plurality of slots 5 are formed at least part of which interfere with the apex 4 of the holes to form a plurality of transfers passages through the same sheet. Preferably the holes are lined up along lines 6 and a single slot 5 joins the apexes of the holes of one line 6. Moreover, the lines of holes and the slots are arranged with a relatively reduced pitch while the distance between the holes in a line is generally greater. However, it is also possible an inverted solution, in which the pitch between the slots is greater than the pitch between the holes aligned along each slot. Each slot 5 affects the sheet for a depth H (figure 4) and determines a development 7 of the transfer section 8 for fluid passage which approximately consists of two stretches of cylindrical surface having a length P, two stretches of conic surface having a length F and a central stretch G. This transfer section presents a width W (figure 3) equal to that of the slot and therefore the value of the transfer section is determined by W (2P+2F+ G). As will be seen better below, it is suitable that this transfer section be less or at most equal to the transfer section of the holes 3.

As mentioned, the loose solid material is located on the side of the slots, on the surface 9 of a fluid arrival chamber C, for instance a catalysis chamber, while on the opposite side an outflow chamber E is foreseen, for example for the reagents toward the exit of the reactor vessel.

In practice, the fluid that flushes the loose solid material penetrates into the slots 5 and is conveyed to the apex of the holes 3 and from there up to the chamber E.

Therefore, the filtering support according to the present invention is obtained by drilling the holes 3 from one side of a sheet and the slots 5 from the other side. The sheet can subsequently be used flat, or bent to form an element for instance cylindrical, in which the slots 5 are arranged circumferentially or according to generatrices of the curved zone, either on the concave or on the convex part. As an alternative, it is possible to form the slots after bending, for instance calendering, the perforated sheet.

The operation of the support for loose solid material according to the invention happens as follows: the loose solid material, for instance a catalyst in small spheres, is placed in the C chamber in contact with the wall 9. The slots 5 are of such a width as to prevent the material from penetrating into the same and they moreover don't constitute any obstacle to the possible movement of the solid material to allow its substitution when the support operates with a moving bed of this material.

The path of the fluid through the chamber C is not dependent from the position of the holes 3, but happens in any direction because of the natural disposition of the loose solid material. The slots 5 produce a larger transfer section on the wall 9 of the sheet 2, than the sum of the transfer sections 8 between slots and blind holes. Therefore the pressure drop which regulates the fluid flow is concentrated in the transfer section 8. The fluid doesn't approach each hole only from directly in the axial direction to the same, but, due to the presence of the slots, also enters from wall areas distant from such holes. The incoming fluid in the slot in a zone comprised between two holes could flow into one of the two holes, obviously the nearer one, with the result of making the transfer of the fluid more uniform.

The control of the pressure drops introduced from the filtering support according to the invention could be effected by modifying the diameter of the holes and/or their mutual pitch, as happens in the known embodiments, but also acting on the width of the slots 5, at least within the limits imposed by the need to prevent the loose material penetrating the same.

It is also possible, however, to act advantageously on the degree of the intersection between slots and holes. Supposing that the transfer section is that indicated above, it is possible to vary this transfer section, modifying said degree of interference between slots and holes and therefore varying the length of the stretches P and F in figure 5 accordingly, between a minimum in which these stretch lengths are equal to zero and a practical maximum in which the transfer section results equal to the cross section of the holes. It is therefore possible, acting on one or more of the quoted factors, to calculate and determine the pressure drops created by the support according to the invention, differentiating them from zone to zone, which is important specially for uses in which the bed of loose solid material is radially crossed by the fluid and the filtering support has a cylindrical shape.

As an example, mathematical models and physical tests have been carried out with the following sizes: diameter of the holes D= 4 mm; depth of the slots H = 2.5 mm, width of the slots W = 0.8 mm; distribution of the holes: pitch 16 mm between holes on each slot and pitch between slots 4 mm, with holes in alternated array; development 7 of transfer section 8 with: P= 0.5 mm, F= 1.7 mm, and G= 0.7 mm, equal to a total value of 5.1 mm, and therefore transfer section of 4.08 mm², while the section of the holes is equal to 12.56 mm².

The percentages of the cross section of the holes, stretches of slot and of the said transfer sections 8, compared to a collection surface 10 (having an area of 4x16 mm²), are respectively 19.6% for the holes, 20% for the slots and only 6.37% for the transfer sections 8.

In sizing the slots care is taken to ensure that the depth H is sufficient to locate the desired minimum value in the transfer between the holes and each corresponding slot. In the preceding example, doubling the depth of the slots (2H) would give a total surface of transfer equal to 8.08 mm², or 12.62% of said collection surface 10.

It is to be pointed out that slots 5 having a section shape different than the rectangular one as shown in figs 1-5 can be foreseen. For instance, when the loose solid material is particularly small in size, it is possible to reduce the flow entry section in the slots by a partial buckling from the outside (Fig. 6) or by trapezoidally shaped slots with the minor basis toward the outside (Fig. 7). These particularly shaped slots could prevent plugging of the slots with the fines resulting from the breakage of the loose solid materials.

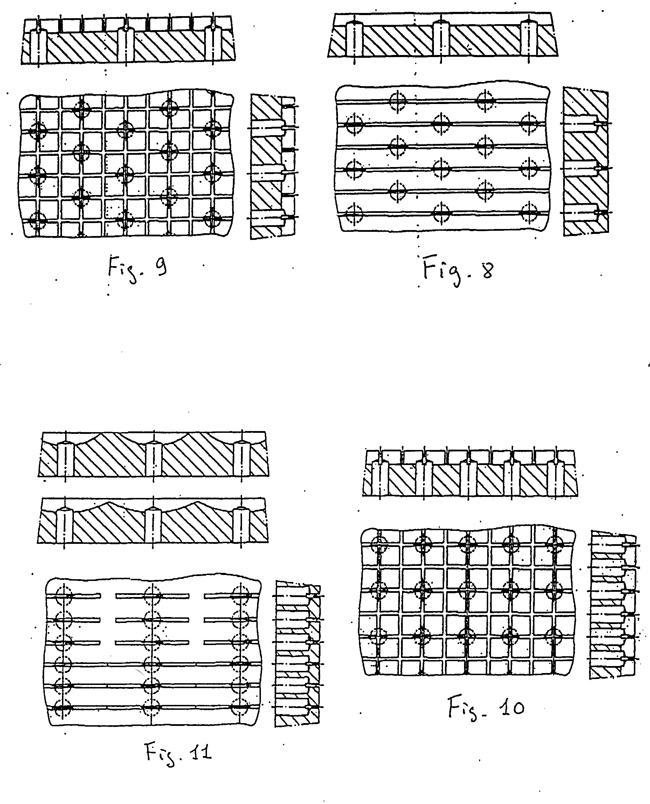

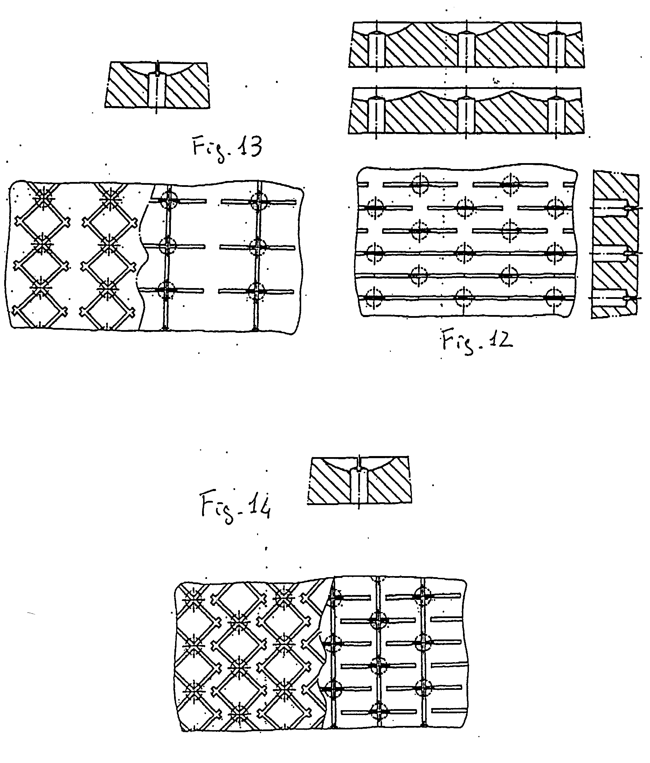

It is evident that the illustrated arrangement of the holes and of the slots along aligned lines is most convenient from the production point of view. But it must be clear that the invention also applies to supports in which the arrangement of the holes and slots is different, provided of course that the slots intersect all the holes. Figs. 8 to 14 show possible shapes of the slot/hole array. In Fig. 8 an alternated hole array is provided for, and the same hole array is foreseen in Fig. 9, but with crossed slots, Crossed slots with aligned holes are shown in Fig. 10. Figs. 11 to 14 show interrupted or connected slots having arc shaped sections and with aligned holes (Figgs. 11) or alternated holes (Fig. 12). Moreover, the slots can be crossed (Figgs. 13 and 14).

## Claims

1. A filtering support for loose solid material, comprising a perforated sheet (2) disposed to separate a fluid feeding chamber (C) and a fluid outflow chamber (E), characterized in that the holes (3) of the sheet (2) are blind and open onto said outflow chamber (E), such holes being in fluid communication with a plurality of slots (5) in the opposite sheet side (9) with regard to said holes and intersecting the hole closed apexes (4).

2. A filtering support according to Claim 1, characterized in that said blind holes (3) are aligned and that one slot (5) intersects the holes of a hole line.

3. A filtering support according to Claim 2, characterized in that the holes (3) are arranged in rows and columns and that the pitch between the holes in the rows (6) is greater than the pitch between the holes in the columns.

4. A filtering support according to Claim 2, characterized in that the holes (3) are arranged in rows and columns and that the pitch between the holes in the rows (6) is lesser than the pitch between the holes in the columns.

5. A filtering support according to any of the previous claims, characterized in that a transfer section (8) for the fluid is obtained at each intersection between each blind hole (3) and a related slot (5).

6. A filtering support according to any previous claim, characterized in that the slots (5) have an essentially rectangular shape in cross-section.

7. A filtering support according to one of the claims 1 to 5, characterized in that the slots (5) have an elongated shape in cross-section with a mouth toward the outside which is throttled or has a reduced width, with reference to the remaining part of the slot.

8. A filtering support according to any of the previous claims, characterized in that it is flat.

9. A filtering support according to any of claims from 1 to 7, characterized in that it is bent with the slots arranged in the concave part thereof.

10. A filtering support according to any of Claims from 1 to 7, characterized in that it is bent with the slots arranged in the convex part thereof.

11. A method for the production of a filtering support for loose solid material, characterized in that a plurality of blind holes (3) are formed on one side of a sheet and in that the apexes (4) of said blind holes are intersected with a plurality of slots (5) formed on the sheet side opposite to that of opening of said blind holes.

12. A method according to Claim 11, characterized in that said support (1) is produced in a flat form and is bended after the formation of said holes and slots.

13. A method according to Claim 11, characterized in that said blind holes are formed in said sheet in a flat condition, then the sheet is bended and said slots are formed on the bent sheet.

14. A method according to one of claims 11 to 13, characterized in that the diameter of the holes and/or the pitch between the holes and/or the width of the slots and/or the degree of intersection between the holes and slots are calculated and in case made different in various zones of the sheet, according to the desired pressure drops to be introduced by the filtering support.
